# EUROPEAN PATENT APPLICATION

(11) **EP 4 825 690 A1**
(43) Date of publication of application: **21.10.2026**
(21) Application number: 24910503.2
(22) Date of filing: 28.11.2024
(51) Int. Cl.: B60W 40/00

(54) **REARVIEW MIRROR DETECTION METHOD AND APPARATUS, AND INTELLIGENT DRIVING DEVICE**

(30) Priority: 28.12.2023 CN 202311840519
(71) Applicant: Yinwang Intelligent Technologies Co., Ltd., Shenzhen, Guangdong 518110 (CN)
(72) Inventor: LIU, Haipeng, Shenzhen, Guangdong 518110 (CN); FANG, Yuanzheng, Shenzhen, Guangdong 518110 (CN); JIANG, Yu, Shenzhen, Guangdong 518110 (CN)
(74) Representative: Gill Jennings & Every LLP
(86) International application number: PCT/CN2024/135078
(87) International publication number: WO 2025/139570

(57) **Abstract**

A rear-view mirror detection method (400) and apparatus, and an intelligent driving device (100) are provided. The method (400) includes: obtaining a first image and a second image, where the first image and the second image are images that are captured at different angles and that include a first rear-view mirror (611) of a target vehicle (610) (S410); determining a location of the first rear-view mirror (611) on the target vehicle (610) based on the first image and the second image (S420); and controlling the intelligent driving device based on the location of the first rear-view mirror (611) on the target vehicle (610) (S430). The images that are captured at different angles and that include the first rear-view mirror (611) of the target vehicle (610) help improve precision of detecting a location of a root of the first rear-view mirror (611). In an automatic parking process, precision of planning a path by an ego vehicle based on the location of the root of the rear-view mirror can be improved, and a probability of scraping against the first rear-view mirror (611) of the target vehicle (610) by the ego vehicle can be reduced, to help improve parking efficiency and safety.

## Description

This application claims priority to Chinese Patent Application No. 202311840519.6, filed with the China National Intellectual Property Administration on December 28, 2023 and entitled "REAR-VIEW MIRROR DETECTION METHOD AND APPARATUS, AND INTELLIGENT DRIVING DEVICE", which is incorporated herein by reference in its entirety.

### TECHNICAL FIELD

This application relates to the field of intelligent vehicles, and more specifically, to a rear-view mirror detection method and apparatus, and an intelligent driving device.

### BACKGROUND

With rapid development of the automotive industry, numerous assisted driving technologies and autonomous driving technologies have emerged, which can reduce driving pressure and improve safety and traffic efficiency. Automatic parking (auto parking, AP) among them is a widely applied assisted driving technology. The AP refers to automatic parking of vehicles into spaces, meaning that an autonomous driving system can semi-automatically or full-automatically help users park vehicles into the parking spaces. Automatic parking may include automatic parking assist (auto parking assist, APA), remote parking assist (remote parking assist, RPA), automated valet parking (auto valet parking, AVP), and the like.

In an automatic parking process, especially when parking into a narrow parking space or an extremely narrow parking space, accurate detection of a location of a rear-view mirror of another vehicle is a key factor in ensuring parking safety. Therefore, there is an urgent need to develop a rear-view mirror detection solution that can accurately identify the location of the rear-view mirror of the another vehicle.

### SUMMARY

This application provides a rear-view mirror detection method and apparatus, and an intelligent driving device, so that accuracy of detecting a location of a rear-view mirror of another vehicle can be improved, to help improve efficiency and safety of parking into a narrow parking space or an extremely narrow parking space.

According to a first aspect, a rear-view mirror detection method is provided. The method may be performed by an intelligent driving device, or may be performed by a computing platform of an intelligent driving device, or may be performed by a chip or a circuit disposed on a computing platform.

The method includes: obtaining a first image and a second image, where the first image and the second image are images that are captured at different angles and that include a first rear-view mirror of a target vehicle; determining a location of the first rear-view mirror on the target vehicle based on the first image and the second image; and controlling the intelligent driving device based on the location of the first rear-view mirror on the target vehicle.

In some implementations, a location of the target vehicle at a moment at which the first image is obtained is the same as a location of the target vehicle at a moment at which the second image is obtained.

The location of the first rear-view mirror on the target vehicle may be understood as a location of a root of the first rear-view mirror on the target vehicle.

It should be noted that capturing the images at different angles may be understood as: An included angle between a connection line between an optical center of an image shooting apparatus that obtains the first image and the first rear-view mirror and a connection line between an optical center of an image shooting apparatus that obtains the second image and the first rear-view mirror is not 0.

In the foregoing technical solution, the images that are captured at different angles and that include the first rear-view mirror of the target vehicle help improve precision of detecting the location of the root of the rear-view mirror. In an automatic parking process of the intelligent driving device, precision of planning a path by the intelligent driving device based on the location of the root of the rear-view mirror can be improved, and a probability of scraping against the rear-view mirror of the target vehicle by the intelligent driving device can be reduced, to help improve parking efficiency and safety.

With reference to the first aspect, in some implementations of the first aspect, the first image is captured at a first moment, the second image is captured at a second moment, and the determining the location of the first rear-view mirror on the target vehicle includes: determining a first straight line based on the first image, where the first straight line is a straight line on which a first area of the intelligent driving device and the root of the first rear-view mirror are located at the first moment; determining a second straight line based on the second image, where the second straight line is a straight line on which a second area of the intelligent driving device and the root of the first rear-view mirror are located at the second moment; and determining the location of the root of the first rear-view mirror on the target vehicle based on an intersection point of the first straight line and an outer contour of the target vehicle and an intersection point of the second straight line and the outer contour of the target vehicle.

In some implementations, the first moment and the second moment are a same moment, and the first area and the second area are different areas. Alternatively, the first moment and the second moment are different moments, and the first area and the second area are a same area.

For example, the first straight line is determined based on a pixel location corresponding to the first rear-view mirror in the first image, and the first straight line indicates a direction from the optical center of the image shooting apparatus that obtains the first image to the first rear-view mirror. The second straight line is determined based on a pixel location corresponding to the first rear-view mirror in the second image, and the second straight line indicates a direction from the optical center of the image shooting apparatus that obtains the second image to the first rear-view mirror.

With reference to the first aspect, in some implementations of the first aspect, the intelligent driving device includes a first image shooting apparatus and a second image shooting apparatus, the first image is captured by the first image shooting apparatus at the first moment, the second image is captured by the second image shooting apparatus at the second moment, the first area is an area in which the first image shooting apparatus is disposed on the intelligent driving device, and the second area is an area in which the second image shooting apparatus is disposed on the intelligent driving device.

With reference to the first aspect, in some implementations of the first aspect, the method further includes: when the first rear-view mirror is in a folded state, determining a location of an outer contour of the first rear-view mirror based on the location of the first rear-view mirror on the target vehicle and a first compensation amount; or when the first rear-view mirror is in an unfolded state, determining a location of an outer contour of the first rear-view mirror based on the location of the first rear-view mirror on the target vehicle and a second compensation amount, where the first compensation amount is less than or equal to the second compensation amount.

In the foregoing technical solution, different compensation amounts are provided for the outer contour of the rear-view mirror of the target vehicle based on a status of the rear-view mirror. This helps further improve precision of detecting the location of the rear-view mirror. In a process of parking into an extremely narrow parking space caused by the target vehicle or driving at an extremely narrow lane caused by the target vehicle, path planning is performed based on the compensated outer contour location of the rear-view mirror. This helps further improve parking or driving efficiency.

With reference to the first aspect, in some implementations of the first aspect, the method further includes: determining the first compensation amount and/or the second compensation amount based on a vehicle model of the target vehicle.

In the foregoing technical solution, different compensation amounts are determined based on different vehicle models, so that compensation can be provided for different vehicles more accurately, and a more accurate outer contour location of the rear-view mirror can be determined.

With reference to the first aspect, in some implementations of the first aspect, the target vehicle is located on a side of a first location area, and the first rear-view mirror is close to the first location area; and the first location area is a target parking area of the intelligent driving device, or the first location area is an area through which the intelligent driving device is to pass to travel to a destination.

In the foregoing technical solution, when the target vehicle is located next to the target parking area of the intelligent driving device, or the target vehicle is located in a traveling path of the intelligent driving device, the location of the first rear-view mirror of the target vehicle is detected. In other words, when another vehicle is located in another area, for example, is far away from the target parking area of the intelligent driving device, the location of the rear-view mirror of the vehicle is not detected, so that calculation complexity of the intelligent driving device can be reduced, and energy consumption can be reduced.

With reference to the first aspect, in some implementations of the first aspect, a drivable width of the first location area is less than or equal to a width threshold.

In the foregoing technical solution, when the width of the first location area is narrow, detecting the location of the first rear-view mirror of the target vehicle helps further reduce calculation complexity and reduce energy consumption.

With reference to the first aspect, in some implementations of the first aspect, the controlling the intelligent driving device includes: controlling, based on the location of the first rear-view mirror on the target vehicle, the intelligent driving device to travel into the first location area.

For example, a path for the intelligent driving device to travel into or pass through the first location area is determined based on the location of the first rear-view mirror on the target vehicle, and the intelligent driving device is controlled to travel along the path.

In the foregoing technical solution, in an automatic parking or autonomous driving process, precision of planning a path by the intelligent driving device based on the location of the root of the rear-view mirror can be improved, and a probability of scraping against the rear-view mirror of the target vehicle by the intelligent driving device can be reduced, to help improve parking efficiency and safety.

With reference to the first aspect, in some implementations of the first aspect, the controlling the intelligent driving device includes: controlling a display apparatus of the intelligent driving device to display the location of the first rear-view mirror on the target vehicle.

In the foregoing technical solution, when the intelligent driving device is in a human driving mode, the display apparatus displays a more accurate location of the first rear-view mirror on the target vehicle, so that a probability of scraping against another vehicle by the ego vehicle in the human driving mode can be reduced, to help improve driving safety.

According to a second aspect, a rear-view mirror detection apparatus is provided. The apparatus includes: an obtaining unit, configured to obtain a first image and a second image, where the first image and the second image are images that are captured at different angles and that include a first rear-view mirror of a target vehicle; and a processing unit, configured to determine a location of the first rear-view mirror on the target vehicle based on the first image and the second image, where the processing unit is further configured to control an intelligent driving device based on the location of the first rear-view mirror on the target vehicle.

With reference to the second aspect, in some implementations of the second aspect, the first image is captured at a first moment, the second image is captured at a second moment, and the processing unit is configured to: determine a first straight line based on the first image, where the first straight line is a straight line on which a first area of the intelligent driving device and a root of the first rear-view mirror are located at the first moment; determine a second straight line based on the second image, where the second straight line is a straight line on which a second area of the intelligent driving device and the root of the first rear-view mirror are located at the second moment; and determine a location of the root of the first rear-view mirror on the target vehicle based on an intersection point of the first straight line and an outer contour of the target vehicle and an intersection point of the second straight line and the outer contour of the target vehicle.

With reference to the second aspect, in some implementations of the second aspect, the intelligent driving device includes a first image shooting apparatus and a second image shooting apparatus, the first image is captured by the first image shooting apparatus at the first moment, the second image is captured by the second image shooting apparatus at the second moment, the first area is an area in which the first image shooting apparatus is disposed on the intelligent driving device, and the second area is an area in which the second image shooting apparatus is disposed on the intelligent driving device.

With reference to the second aspect, in some implementations of the second aspect, the processing unit is further configured to: when the first rear-view mirror is in a folded state, determine a location of an outer contour of the first rear-view mirror based on the location of the first rear-view mirror on the target vehicle and a first compensation amount; or when the first rear-view mirror is in an unfolded state, determine a location of an outer contour of the first rear-view mirror based on the location of the first rear-view mirror on the target vehicle and a second compensation amount, where the first compensation amount is less than or equal to the second compensation amount.

With reference to the second aspect, in some implementations of the second aspect, the processing unit is further configured to: determine the first compensation amount and/or the second compensation amount based on a vehicle model of the target vehicle.

With reference to the second aspect, in some implementations of the second aspect, the target vehicle is located on a side of a first location area, and the first rear-view mirror is close to the first location area; and the first location area is a target parking area of the intelligent driving device, or the first location area is an area through which the intelligent driving device is to pass to travel to a destination.

With reference to the second aspect, in some implementations of the second aspect, a drivable width of the first location area is less than or equal to a width threshold.

With reference to the second aspect, in some implementations of the second aspect, the processing unit is configured to: control, based on the location of the first rear-view mirror on the target vehicle, the intelligent driving device to travel into the first location area.

With reference to the second aspect, in some implementations of the second aspect, the processing unit is configured to: control a display apparatus of the intelligent driving device to display the location of the first rear-view mirror on the target vehicle.

According to a third aspect, a rear-view mirror detection apparatus is provided. The apparatus includes: a memory, configured to store a computer program; and a processor, configured to execute the computer program stored in the memory, to enable the apparatus to perform the method according to any possible implementations of the first aspect.

According to a fourth aspect, an intelligent driving device is provided. The intelligent driving device includes the apparatus according to any possible implementation of the second aspect or the third aspect.

With reference to the fourth aspect, in some implementations of the fourth aspect, the intelligent driving device is a vehicle.

According to a fifth aspect, a computer program product is provided. The computer program product includes computer program code. When the computer program code is run on a computer, the computer is enabled to perform the method according to any one of the possible implementations of the first aspect.

It should be noted that the computer program code may be completely or partially stored in a first storage medium. The first storage medium may be encapsulated together with a processor, or encapsulated separately from a processor.

According to a sixth aspect, a computer-readable medium is provided. The computer-readable medium stores instructions. When the instructions are executed by a processor, the processor is enabled to implement the method according to any one of the possible implementations of the first aspect.

According to a seventh aspect, a chip is provided. The chip includes a circuit, and the circuit is configured to perform the method according to any one of the possible implementations of the first aspect.

### BRIEF DESCRIPTION OF DRAWINGS

FIG. 1 is a functional diagram of an intelligent driving device according to an embodiment of this application;
FIG. 2 is a block diagram of a rear-view mirror detection system according to an embodiment of this application;
FIG. 3 is a diagram of a disposition location of an image shooting apparatus according to an embodiment of this application;
FIG. 4 is a schematic flowchart of a rear-view mirror detection method according to an embodiment of this application;
FIG. 5 is a diagram of an application scenario of a rear-view mirror detection method according to an embodiment of this application;
FIG. 6 is another diagram of an application scenario of a rear-view mirror detection method according to an embodiment of this application;
FIG. 7 is still another diagram of an application scenario of a rear-view mirror detection method according to an embodiment of this application;
FIG. 8 is another schematic flowchart of a rear-view mirror detection method according to an embodiment of this application;
FIG. 9 is a block diagram of a rear-view mirror detection apparatus according to an embodiment of this application; and
FIG. 10 is another block diagram of a rear-view mirror detection apparatus according to an embodiment of this application.

### DESCRIPTION OF EMBODIMENTS

To facilitate understanding of the solutions in embodiments of this application, concepts in this application are described.
1. Root of a rear-view mirror: The root of the rear-view mirror is an area in which an outer rear-view mirror is connected to a vehicle body of a vehicle.
2. Tip of a rear-view mirror: The tip of the rear-view mirror is a part that is of the outer rear-view mirror and that is farthest from a vehicle body, or is referred to as an outer contour of the rear-view mirror.
3. A rear-view mirror is in a folded state or an unfolded state: A flip-up rear-view mirror is used as an example. A flip angle of the rear-view mirror is an included angle between outer tangent planes of a rear-view mirror housing (an upper mirror housing or a lower mirror housing) present when the rear-view mirror is unfolded and when the rear-view mirror is folded to a limit location. The limiting location may be understood as a location at which an included angle that can be supported by a steering device of the rear-view mirror and that is between the rear-view mirror and a vehicle body is minimum. The flip angle may be decomposed into a horizontal flip angle and a vertical flip angle. A four-wheeled vehicle is used as an example, a horizontal flip angle may be an angle at which a rear-view mirror flips in a plane on which four tires of the vehicle are located, and a vertical flip angle may be an angle at which the rear-view mirror flips perpendicular to the plane on which the four tires of the vehicle are located. It may be understood that both the horizontal flip angle and the vertical flip angle of the rear-view mirror are greater than or equal to zero. When the rear-view mirror is folded to the limit location, both the horizontal flip angle and the vertical flip angle of the rear-view mirror are zero. A state of the rear-view mirror present when the rear-view mirror is folded to the limit location is the unfolded state, and a state of the rear-view mirror present when the horizontal flip angle of the rear-view mirror is not zero is the unfolded state.

The following describes technical solutions of this application with reference to accompanying drawings.

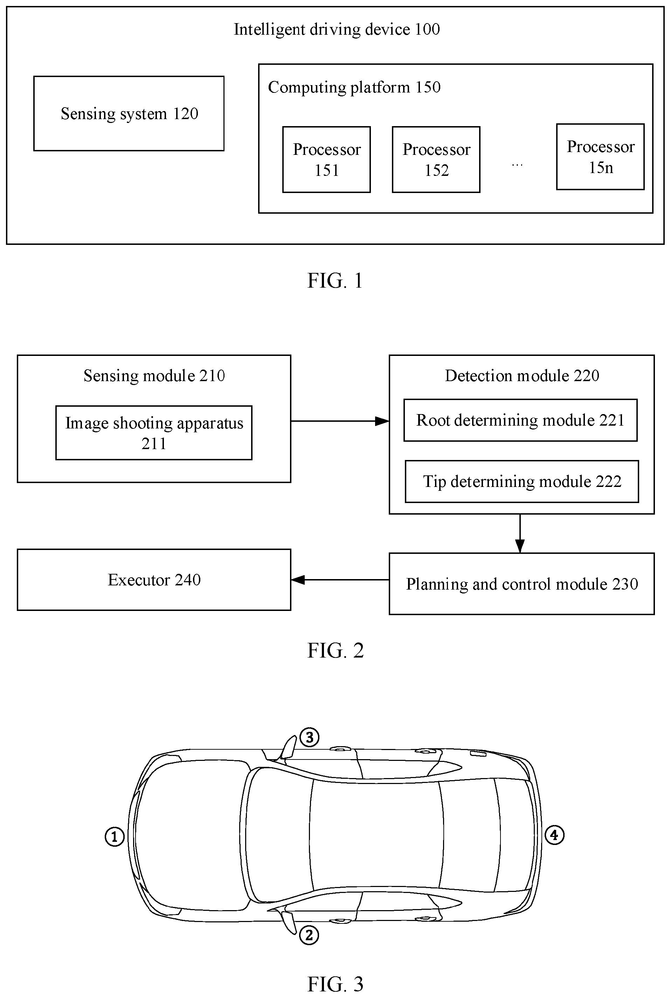

FIG. 1 is a functional block diagram of an intelligent driving device according to an embodiment of this application. As shown in FIG. 1, the intelligent driving device 100 may include a sensing system 120 and a computing platform 150. The sensing system 120 may include several sensors configured to sense surrounding environment information of the intelligent driving device 100. For example, the sensing system 120 may include a positioning system. The positioning system may be a global positioning system (global positioning system, GPS), a BeiDou system, or another positioning system. For another example, the sensing system 120 may further include one or more of the following: an inertial measurement unit (inertial measurement unit, IMU), a lidar, a millimeter-wave radar, an ultrasonic radar, and an image shooting apparatus. In this application, the image shooting apparatus may include but is not limited to a fisheye camera and a wide-angle camera. The image shooting apparatus may include a red, green, and blue/infrared (red, green, and blue/infrared, RGB/IR) camera, or may include a depth camera, for example, a time of flight (time of flight, TOF) camera, a binocular camera, or a structured light camera.

Some or all functions of the intelligent driving device 100 may be controlled by the computing platform 150. The computing platform 150 may include processors 151 to 15n. The processor is a circuit with a signal processing capability. In an implementation, the processor may be a circuit with an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory, to implement a corresponding function.

The intelligent driving device 100 may include an advanced driver assistance system (advanced driver assistance system, ADAS). The ADAS obtains information around the intelligent driving device by using a plurality of sensors (including but not limited to: a lidar, a millimeter-wave radar, an image shooting apparatus, an ultrasonic sensor, a global positioning system, and an inertial measurement unit) on the intelligent driving device, and analyzes and processes the obtained information, to implement functions such as obstacle sensing, target recognition, intelligent driving device positioning, path planning, and driver monitoring/reminding, to improve driving safety, automation, and comfort of the intelligent driving device.

In terms of logical functions, the ADAS usually includes three main functional modules: a sensing module, a decision-making module, and an execution module. The sensing module senses an environment around a vehicle body through the sensor, and inputs corresponding real-time data to a processing center of a decision-making layer. The sensing module mainly includes a vehicle-mounted camera, an ultrasonic radar, a millimeter-wave radar, a lidar, or the like. The decision-making module uses a computing apparatus and an algorithm to make a corresponding decision based on information obtained by the sensing module. After receiving a decision signal from the decision-making module, the execution module takes a corresponding action, for example, driving, changing a lane, steering, braking, or warning.

Under different autonomous driving levels (L0 to L5), the ADAS may implement different levels of autonomous driving assistance based on information obtained by using an artificial intelligence algorithm and a plurality of sensors. The foregoing autonomous driving levels (L0 to L5) are based on a grading standard of the society of automotive engineers (society of automotive engineers, SAE). L0 indicates no automation, L1 indicates driving support, L2 indicates partial automation, L3 indicates conditional automation, L4 indicates high automation, and L5 indicates full automation. Tasks of monitoring and responding to road conditions at L1 to L3 are jointly completed by a driver and the system, and the driver needs to take over a dynamic driving task. L4 and L5 enable the driver to be completely transformed into a passenger. Currently, functions that can be implemented by the ADAS mainly include but are not limited to: adaptive cruise, automatic emergency braking, automatic parking, blind spot monitoring, traffic warning/braking for a front crossroad, traffic warning/braking for a rear crossroad, preceding vehicle collision warning, lane deviation warning, lane keeping assistance, trailing vehicle anti-collision warning, traffic sign recognition, traffic jam assistance, highway assistance, and the like. It should be understood that the foregoing functions may have specific modes at different autonomous driving levels (L0 to L5). A higher autonomous driving level corresponds to a more intelligent mode. For example, the automatic parking may include APA, RPA, and AVP. For the APA, the driver does not need to operate a steering wheel, but still needs to monitor a status of the intelligent driving device in real time on the intelligent driving device. For the RPA, the driver may use a terminal (for example, a mobile phone) to remotely park the intelligent driving device outside the intelligent driving device. For the AVP, the intelligent driving device may complete parking without the driver. In terms of corresponding autonomous driving levels, the APA is approximately at a level of L2, the RPA is approximately at a level of L2 or L3, and the AVP is approximately at a level of L4.

In this embodiment of this application, the computing platform 150 may determine a location of a tip of a rear-view mirror of another vehicle based on an image of the another vehicle obtained by the sensing system 120. The computing platform 150 may further perform parking path planning based on the location that is of the tip of the rear-view mirror of the another vehicle and that is determined by the computing platform 150, to reduce a probability of scraping against the rear-view mirror of the another vehicle by an ego vehicle in a parking process.

The intelligent driving device in this embodiment of this application may include a road transportation means, a water transportation means, an air transportation means, an industrial device, an agricultural device, an entertainment device, or the like. For example, the intelligent driving device may be a vehicle. The vehicle is a vehicle in a broad sense, and may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreation device, a toy vehicle, or the like. A type of the vehicle is not specifically limited in embodiments of this application.

FIG. 2 is a diagram of an architecture of a rear-view mirror detection system according to an embodiment of this application. As shown in FIG. 2, the system includes a sensing module 210, a detection module 220, a planning and control module 230, and an executor 240. The sensing module 210 may include one or more sensors in the sensing system 120 shown in FIG. 1. For example, the sensing module 210 includes an image shooting apparatus 211. The detection module 220 and the planning and control module 230 may be separately one or more processors in the computing platform 150 shown in FIG. 1.

More specifically, the detection module 220 includes a root determining module 221 and a tip determining module 222. Based on images that are captured by the image shooting apparatus 211 at at least two angles and that include a target rear-view mirror of a target vehicle, the root determining module 221 determines a location of a root of the target rear-view mirror. The tip determining module 222 is configured to: determine an unfolded/folded state of the target rear-view mirror based on the images that are captured by the image shooting apparatus 211 and that include the target rear-view mirror, determine a tip compensation amount based on the unfolded/folded state of the target rear-view mirror, and determine a location of a tip of the target rear-view mirror based on the location of the root and the tip compensation amount. The target vehicle may be located in a path through which an intelligent driving device needs to pass to travel to a target location, and the target rear-view mirror may be a rear-view mirror on a side that is on the target vehicle and that is close to the path through which the intelligent driving device needs to pass to travel to the target location.

Further, the detection module 220 sends, to the planning and control module 230, information that is about the location of the tip of the rear-view mirror and that is determined by the detection module 220. When planning, for the intelligent driving device, the path for the intelligent driving device to travel to the target location, the planning and control module 230 plans, based on the location of the tip of the rear-view mirror, a path along which the intelligent driving device is to pass the target vehicle. The planning and control module 230 calculates a corresponding control value based on the planned path, and outputs the control value to the executor 240. When the executor 240 executes the control value, the vehicle is controlled to travel based on the planned path. In some possible implementations, the executor may include a steering system and a braking control system in the intelligent driving device 100.

It should be understood that the foregoing modules are merely examples. During actual application, the foregoing modules may be added or deleted according to an actual requirement. For example, in the system architecture shown in FIG. 2, the root determining module 221 and the tip determining module 222 may be combined into one module. For another example, the system architecture shown in FIG. 2 may further include a prompt module. The prompt module is configured to prompt the location of the tip of the target rear-view mirror of the target vehicle, or the prompt module is configured to prompt a relationship between the location of the tip of the target rear-view mirror and the planned path of the intelligent driving device, for example, a distance between the location of the tip of the target rear-view mirror and an outer contour of the intelligent driving device present when the intelligent driving device travels on the planned path.

An example in which the intelligent driving device is a vehicle is used. FIG. 3 is a diagram of an arrangement location of the image shooting apparatus in the vehicle in the foregoing embodiment. As shown in FIG. 3, the image shooting apparatus may be disposed in the front (for example, a location ①) of the vehicle, for example, a front-view camera disposed below a front license plate frame; the image shooting apparatus may be disposed in a tail (for example, a location ④) of the vehicle, for example, a rear-view camera disposed above a rear license plate frame; or the image shooting apparatus may be disposed on a side (for example, a location ② or a location ③) of the vehicle, for example, a side camera disposed at a left or right rear-view mirror of the vehicle.

It should be understood that the arrangement location of the image shooting apparatus shown in FIG. 3 is merely an example for description. During actual implementation, the image shooting apparatus may alternatively be arranged at another location outside the vehicle.

The foregoing describes the rear-view mirror detection system provided in this application with reference to FIG. 1 to FIG. 3. The following describes in detail a rear-view mirror detection method provided in this application.

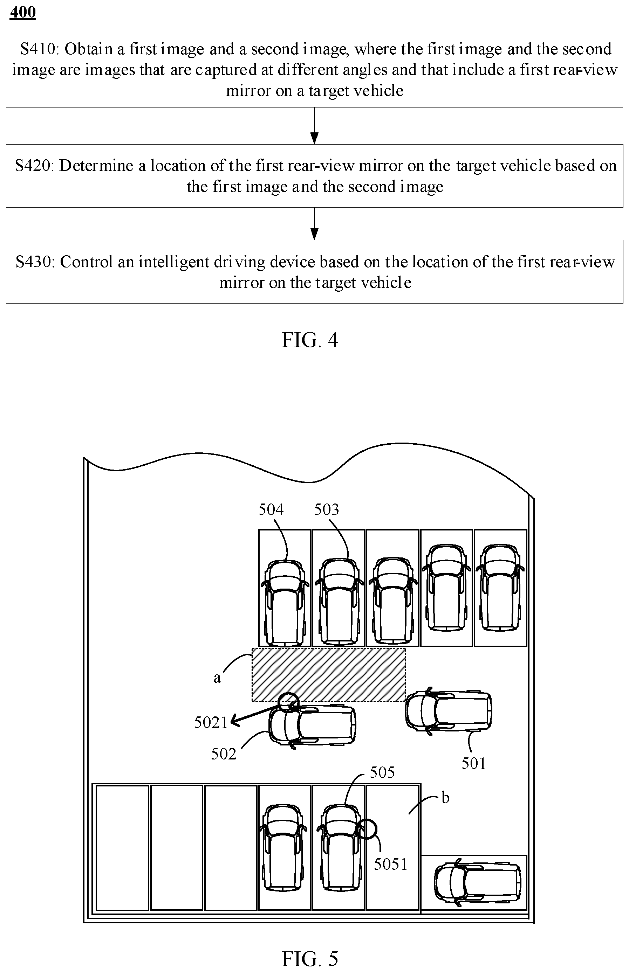

FIG. 4 is a schematic flowchart of a rear-view mirror detection method according to an embodiment of this application. The method 400 shown in FIG. 4 may be performed by the intelligent driving device 100 shown in FIG. 1, for example, performed by the computing platform 150 of the intelligent driving device 100. Alternatively, the method 400 may be performed by the system shown in FIG. 2, for example, performed by the detection module 220. Specifically, the method 400 may include S410 and S420.

S410: Obtain a first image and a second image, where the first image and the second image are images that are captured at different angles and that include a first rear-view mirror of a target vehicle.

For example, the first image and the second image may be captured by a same image shooting apparatus at different moments. For example, the target vehicle is located on a right side of the intelligent driving device. In this case, the image shooting apparatus may be the side-view camera disposed at the location ③ shown in FIG. 3. Alternatively, the first image and the second image may be captured by different image shooting apparatuses at a same moment. For example, the target vehicle is located at the front-right of the intelligent driving device, the different image shooting apparatuses may be the front-view camera disposed at the location ① shown in FIG. 3 and the side-view camera disposed at the location ③ shown in FIG. 3. Alternatively, the first image and the second image may be captured by different image shooting apparatuses at different moments. For example, in a traveling process of the intelligent driving device, the first image is captured by the front-view camera disposed at the location ① shown in FIG. 3 at a first moment, and the second image is captured by the side-view camera disposed at the location ③ shown in FIG. 3 at a second moment.

For example, the target vehicle may be stationary, or a speed of the target vehicle is less than or equal to a speed threshold. For example, the speed threshold may be 1 meter per second (meter per second, m/s), 0.5 m/s, or another value. More specifically, if the first image and the second image are captured by a same image shooting apparatus at different moments, locations of the target vehicle between the two different moments may be the same; or if the first image and the second image are captured by different image shooting apparatuses at a same moment, the speed of the target vehicle may be less than or equal to the speed threshold.

In some implementations, the target vehicle may be a vehicle that affects traveling of the intelligent driving device. For example, the target vehicle is located on a side of a first location area, and the first rear-view mirror is close to the first location area. The first location area is a target parking area of the intelligent driving device, or the first location area is an area through which the intelligent driving device is to pass to travel to a destination. As shown in FIG. 5, a vehicle 501 is used as an example of the intelligent driving device. In an example, the vehicle 501 needs to pass through an area a in a process of traveling forward. Because there is a vehicle 502 on a side of the area a, and presence of the vehicle 502 may affect traveling smoothness of the vehicle 501 (for example, when a pose of the vehicle 501 is inappropriate, the vehicle 501 may scrape against a protruding portion of an outer contour of the vehicle 502), the vehicle 501 may detect a location of a protruding portion on a side that is of the vehicle 502 and that is close to the area a (for example, a rear-view mirror 5021), and plan a traveling path in the area a based on the location of the protruding portion of the vehicle 502, to prevent the ego vehicle from scraping against the vehicle 502. In another example, the vehicle 501 selects an area b as a parking area. Because there is a vehicle 505 on a side of the area b, and presence of the vehicle 505 may affect a parking pose of the vehicle 501, the vehicle 501 may detect a location of a protruding portion on a side that is of the vehicle 505 and that is close to the area b (for example, a rear-view mirror 5051), and plan, based on the location of the protruding portion of the vehicle 505, a parking pose of the vehicle 501 in the area b and a traveling path for the vehicle 501 to park into the area b, to prevent the ego vehicle from scraping against the vehicle 505 and/or avoid inconvenience for a passenger on a right side to get on or off the ego vehicle after the ego vehicle is parked into the area b.

In some implementations, when a drivable width of a first location area is less than or equal to a width threshold, a location of a rear-view mirror that is of a vehicle on a side of the first location area and that is close to the first location area is detected. For example, due to a limitation of the vehicle 502, a vehicle 503, and a vehicle 504, a width of the area a in a direction perpendicular to a traveling direction of the vehicle 501 is excessively narrow. As a result, when passing through the area a, the vehicle 501 may scrape against at least one of the vehicle 502, the vehicle 503, and the vehicle 504. In this case, the vehicle 501 may detect a location of the rear-view mirror 5021 of the vehicle 502, and plan a traveling path of the ego vehicle in the area a based on the location of the rear-view mirror 5021. For example, the width threshold may be 2.3 meters, 2.5 meters, or another value. For example, the width threshold is determined based on a width of the ego vehicle, and the width threshold is obtained by adding a preset width to the width of the ego vehicle. The preset width may be 30 centimeters, 40 centimeters, or another value.

It may be understood that the vehicle 502 and the vehicle 505 may be considered as some examples of the target vehicle, the area a and the area b may be considered as some examples of the first location area, and the rear-view mirror 5021 and the rear-view mirror 5051 may be considered as some examples of the first rear-view mirror.

S420: Determine a location of the first rear-view mirror on the target vehicle based on the first image and the second image.

For example, the location of the first rear-view mirror on the target vehicle includes a location of the first rear-view mirror in a longitudinal direction of the target vehicle, or may further include a location of the first rear-view mirror in a height direction of the target vehicle. The longitudinal direction is a direction parallel to a center line of the vehicle, and the height direction is a direction perpendicular to a plane on which four wheels of the vehicle are located. In addition, the location of the first rear-view mirror on the target vehicle may be understood as a location of a root of the first rear-view mirror on an outer contour of the target vehicle.

In some implementations, the determining the location of the first rear-view mirror on the target vehicle based on the first image and the second image includes: determining a first straight line based on the first image, where the first straight line is a straight line on which a first area of the intelligent driving device and the root of the first rear-view mirror are located at the first moment; determining a second straight line based on the second image, where the second straight line is a straight line on which a second area of the intelligent driving device and the root of the first rear-view mirror are located at the second moment; and determining the location of the root of the first rear-view mirror on the outer contour of the target vehicle based on an intersection point of the first straight line and the outer contour of the target vehicle and an intersection point of the second straight line and the outer contour of the target vehicle.

The first straight line is determined based on a pixel location corresponding to the first rear-view mirror in the first image, and the first straight line indicates a direction from an optical center of an image shooting apparatus that obtains the first image to the first rear-view mirror. The second straight line is determined based on a pixel location corresponding to the first rear-view mirror in the second image, and the second straight line indicates a direction from an optical center of an image shooting apparatus that obtains the second image to the first rear-view mirror.

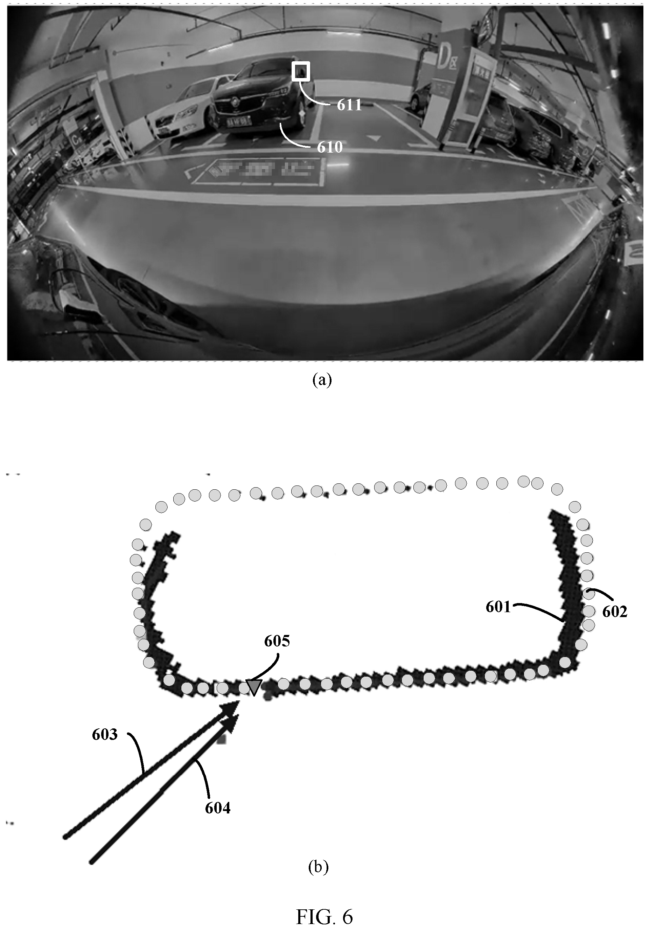

As shown in (a) in FIG. 6, a vehicle 610 is an example of the target vehicle, and a rear-view mirror 611 is an example of the first rear-view mirror. As shown in (b) in FIG. 6, a contour 601 is an outer contour that is of the vehicle 610 and that is sensed by a radar sensor, and a contour 602 is an outer contour that is of the vehicle 610 and that is determined through fusion based on sensing results of a plurality of sensors (such as a radar sensor and an image shooting apparatus). An arrow 603 may be understood as a direction that is from an optical center of an image shooting apparatus 1 of the ego vehicle to a root of the rear-view mirror 611 and that presents when the image shooting apparatus 1 is at a location 1. The arrow 604 may be understood as a direction that is from an optical center of an image shooting apparatus 2 of the ego vehicle to the root of the rear-view mirror 611 and that presents when the image shooting apparatus 2 is at a location 2. The image shooting apparatus 1 and the image shooting apparatus 2 may be a same image shooting apparatus. When the image shooting apparatus 1 and the image shooting apparatus 2 are a same image shooting apparatus, the location 1 and the location 2 are different locations of the image shooting apparatus. Further, a location 605 is determined based on an intersection point of the arrow 603 and the contour 602 (referred to as an intersection point a below) and an intersection point of the arrow 604 and the contour 602 (referred to as an intersection point b below). The location 605 indicates a location of the root of the rear-view mirror 611 on the vehicle 610. For example, the location 605 may be determined based on different weights of a location indicated by the intersection point a and a location indicated by the intersection point b. For example, during determining of the location 605, a weight of the location indicated by the intersection point a and a weight of the location indicated by the intersection point b each are 0.5, or a weight of the location indicated by the intersection point a and a weight of the location indicated by the intersection point b are respectively 0.4 and 0.6. This is not specifically limited in this application. During actual implementation, the weight of the location indicated by the intersection point a and the weight of the location indicated by the intersection point b may be determined based on locations of the image shooting apparatus 1 and the image shooting apparatus 2 in the ego vehicle; or the weight of the location indicated by the intersection point a and the weight of the location indicated by the intersection point b may be determined based on an angle between the arrow 603 (or 604) and a central axis of the ego vehicle; or the weight of the location indicated by the intersection point a and the weight of the location indicated by the intersection point b may be determined by using another method.

It may be understood that a straight line in which the arrow 603 is located may be considered as an example of the first straight line, and a straight line in which the arrow 604 is located may be considered as an example of the second straight line.

In some implementations, after S420 is performed, the method 400 further includes: determining a location of the first rear-view mirror in a lateral direction of the target vehicle. The lateral direction is a direction parallel to the plane on which the four wheels of the vehicle are located and perpendicular to the center line of the vehicle. The location of the first rear-view mirror in the lateral direction may include a location of a tip of the first rear-view mirror.

For example, the location of the tip of the first rear-view mirror may be obtained by adding a lateral distance to the location of the root of the first rear-view mirror in the lateral direction parallel to the target vehicle. For example, coordinates of the location of the root of the first rear-view mirror in an xoy plane of a vehicle coordinate system are (x, y). In this case, coordinates of the location of the tip of the first rear-view mirror in the xoy plane of the vehicle coordinate system may be (x, y+Δy). An x-axis is parallel to the longitudinal direction of the target vehicle, a y-axis is parallel to the lateral direction of the target vehicle, a positive direction of the y-axis is a direction from a vehicle center to the first rear-view mirror, and Δy indicates the lateral distance. For example, the lateral distance may be 12 centimeters, 15 centimeters, or another value. For example, the lateral distance may be determined based on a vehicle model of the target vehicle.

In some implementations, before or after S420 is performed, or when S420 is performed, the method 400 further includes: determining an unfolded/folded state of the first rear-view mirror, that is, the first rear-view mirror is in a folded state or an unfolded state; and when the first rear-view mirror is in a folded state, determining a location of an outer contour of the first rear-view mirror based on the outer contour of the target vehicle and a first compensation amount; or when the first rear-view mirror is in an unfolded state, determining a location of an outer contour of the first rear-view mirror based on the outer contour of the target vehicle and a second compensation amount, where the first compensation amount is less than or equal to the second compensation amount.

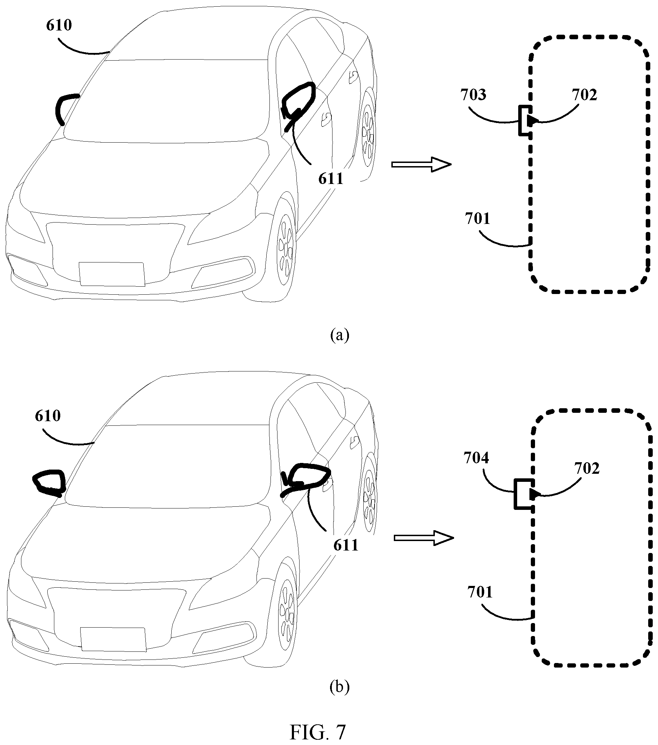

For example, when the location of the root of the first rear-view mirror is determined, determining the location of the outer contour of the first rear-view mirror based on the outer contour of the target vehicle and the first compensation amount (or the second compensation amount) may include: determining the location of the tip of the first rear-view mirror based on the location of the root of the first rear-view mirror on the outer contour of the target vehicle and the first compensation amount (or the second compensation amount). As shown in FIG. 7, an outer contour line of the vehicle 610 is 701, and a location 702 is a location of the root of the rear-view mirror 611 on an outer contour of the vehicle. More specifically, as shown in (a) in FIG. 7, if the rear-view mirror 611 is in a folded state, an outer contour location 703 of the first rear-view mirror is obtained by adding a first compensation amount to 702. As shown in (b) in FIG. 7, if the rear-view mirror 611 is in a folded state, an outer contour location 704 of the first rear-view mirror is obtained by adding a second compensation amount to 702.

For example, the first compensation amount may be 8 centimeters, 10 centimeters, or another value; and the second compensation amount may be 12 centimeters, 15 centimeters, or another value.

During specific implementation, the unfolded/folded state of the first rear-view mirror may be determined based on a plurality of images captured in a period of time, or the unfolded/folded state of the first rear-view mirror may be determined based on a traveling state of the target vehicle. The plurality of images may include the first image and/or the second image, or may be other images than the first image and the second image. In an example, the plurality of images may be processed by a neural network, to determine the unfolded/folded state of the first rear-view mirror. If it is determined, by sequentially processing each of the plurality of images, that the first rear-view mirror is folded, the first rear-view mirror is in a folded state; or if it is determined, by sequentially processing each of the plurality of images, that the first rear-view mirror is unfolded, the first rear-view mirror is in an unfolded state. In another example, if the target vehicle is in a traveling state, it may be determined that the first rear-view mirror is in an unfolded state. The neural network may be a visual geometry group (visual geometry group, VGG) 16, a VGG 19, a residual network (residual network, ResNet) 50, or the like.

In some implementations, the method 400 further includes: determining the first compensation amount and/or the second compensation amount based on the vehicle model of the target vehicle. The vehicle model of the target vehicle indicates that the target vehicle is one of a car, a bus (for example, a mini, light, medium, large, extra-large bus), or a truck (for example, a mini, light, medium, or heavy truck). It should be understood that the foregoing vehicle model is merely an example for description. During actual implementation, the vehicle model of the vehicle may further include more or fewer vehicle models.

For example, the vehicle model of the target vehicle may be determined by processing an image that is captured by an image shooting apparatus and that includes the target vehicle using an image processing method; or the vehicle model of the target vehicle may be determined based on information received through vehicle to everything (vehicle to everything, V2X) communication, vehicle to vehicle (vehicle to vehicle, V2V) communication, or the like.

S430: Control the intelligent driving device based on the location of the first rear-view mirror on the target vehicle.

In some implementations, the controlling the intelligent driving device includes: based on the location of the first rear-view mirror on the target vehicle, controlling the intelligent driving device to travel into the first location area; and/or controlling a display apparatus of the intelligent driving device to display the location of the first rear-view mirror on the target vehicle.

According to the rear-view mirror detection method provided in this embodiment of this application, accuracy of detecting a location of a rear-view mirror of another vehicle can be improved. Further, during vehicle meeting at a narrow location or parking into a narrow parking location, accurate detection of the location of the rear-view mirror helps improve rationality and safety of a traveling path planned for an ego vehicle, improve a vehicle passing rate, and reduce a probability of scraping against the another vehicle by the ego vehicle.

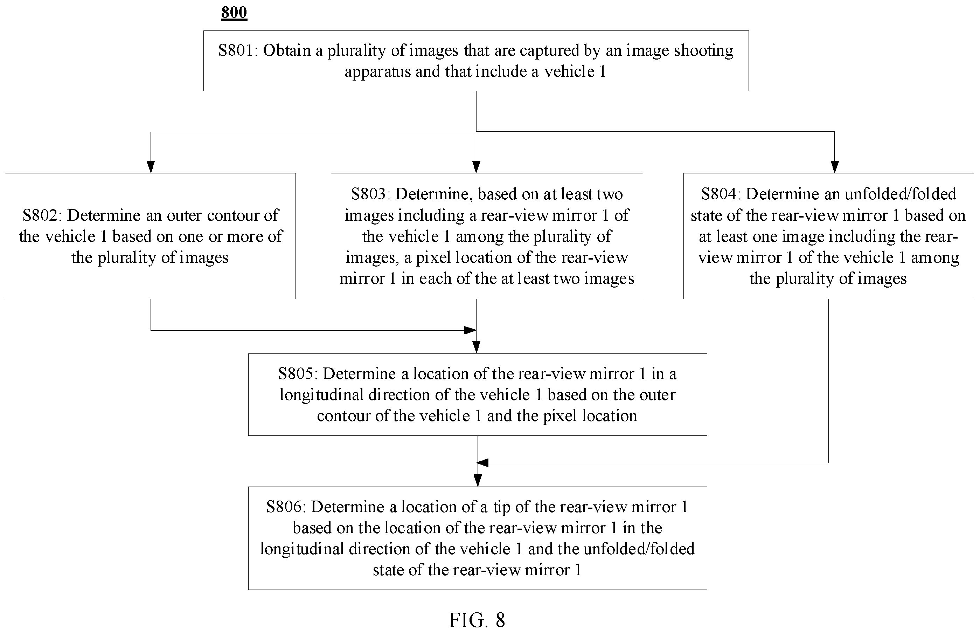

FIG. 8 is another schematic flowchart of a rear-view mirror detection method according to an embodiment of this application. The method 800 may be considered as an extension or further description of the method 400. Specifically, the method 800 includes S801 to S806.

S801: Obtain a plurality of images that are captured by an image shooting apparatus and that include a vehicle 1.

The vehicle 1 may be an example of the foregoing target vehicle.

S802: Determine an outer contour of the vehicle 1 based on one or more of the plurality of images.

For example, the outer contour of the vehicle 1 may be determined by using a post-fusing method. For example, after data collected by the image shooting apparatus and data sensed by a radar are separately processed, a processing result of the data collected by the image shooting apparatus and a result of the data sensed by the radar are fused by using a post-fusing method, for example, Kalman filter, extended Kalman filter (extended Kalman filter, EKF), and Hungarian matching, to determine the outer contour of the vehicle 1.

S803: Determine, based on at least two images including a rear-view mirror 1 of the vehicle 1 among the plurality of images, a pixel location of the rear-view mirror 1 in each of the at least two images.

The rear-view mirror 1 is an example of the foregoing first rear-view mirror.

S804: Determine an unfolded/folded state of the rear-view mirror 1 based on at least one image including the rear-view mirror 1 of the vehicle 1 among the plurality of images.

S805: Determine a location of the rear-view mirror 1 in a longitudinal direction of the vehicle 1 based on the outer contour of the vehicle 1 and the pixel location.

The location of the rear-view mirror 1 in the longitudinal direction of the vehicle 1 may be understood as an intersection point of a location of a root of the rear-view mirror 1 and the outer contour of the vehicle 1 in a direction parallel to a central axis of the vehicle 1.

For example, for a method for determining the location of the rear-view mirror 1 in the longitudinal direction of the vehicle 1 based on the outer contour of the vehicle 1 and the pixel location, refer to the description in the method 400. Details are not described herein again.

S806: Determine a location of a tip of the rear-view mirror 1 based on the location of the rear-view mirror 1 in the longitudinal direction of the vehicle 1 and the unfolded/folded state of the rear-view mirror 1.

For example, for an implementation of determining the location of the tip of the rear-view mirror 1, refer to the description in the method 400. Details are not described herein again.

During actual implementation, some steps in S801 to S806 may be performed. For example, S804 and S806 may not be performed. After determining of a location of the root of the rear-view mirror 1 (namely, the location in the longitudinal direction of the vehicle 1), a preset value is compensated based on the location of the root in a lateral direction of the vehicle 1, to determine the location of the tip of the rear-view mirror 1. The preset value may be 15 centimeters, 20 centimeters, or another value.

In embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

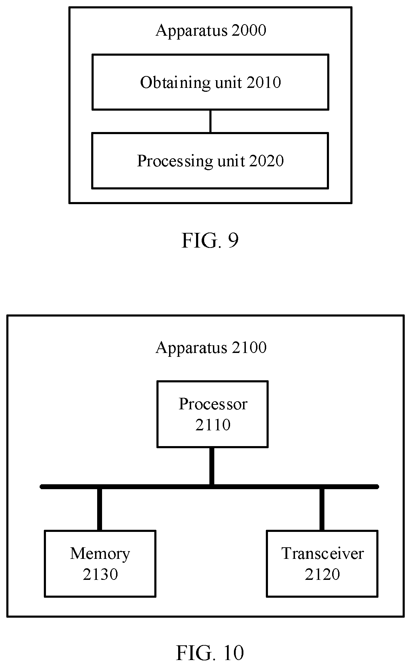

The foregoing describes in detail the rear-view mirror detection method provided in embodiments of this application with reference to FIG. 1 to FIG. 8. With reference to FIG. 9 and FIG. 10, the following describes in detail a rear-view mirror detection apparatus provided in embodiments of this application. It should be understood that descriptions of the apparatus embodiments correspond to descriptions of the method embodiments. Therefore, for content that is not described in detail, refer to the foregoing method embodiments. For brevity, details are not described herein again.

FIG. 9 is a block diagram of a rear-view mirror detection apparatus 2000 according to an embodiment of this application. The apparatus 2000 may include units configured to perform the method 400 or the method 800. In addition, the units in the apparatus 2000 are used to implement corresponding procedures in embodiments of the method 400 or the method 800.

Specifically, the apparatus 2000 includes an obtaining unit 2010 and a processing unit 2020. When the apparatus 2000 is configured to perform the method 400, the obtaining unit 2010 is configured to: obtain a first image and a second image, where the first image and the second image are images that are captured at different angles and that include a first rear-view mirror of a target vehicle; the processing unit 2020 is configured to determine a location of the first rear-view mirror on the target vehicle based on the first image and the second image; and the processing unit 2020 is further configured to control an intelligent driving device based on the location of the first rear-view mirror on the target vehicle.

In some implementations, the first image is captured at a first moment, the second image is captured at a second moment, and the processing unit 2020 is configured to: determine a first straight line based on the first image, where the first straight line is a straight line on which a first area of the intelligent driving device and a root of the first rear-view mirror are located at the first moment; determine a second straight line based on the second image, where the second straight line is a straight line on which a second area of the intelligent driving device and the root of the first rear-view mirror are located at the second moment; and determine a location of the root of the first rear-view mirror on the target vehicle based on an intersection point of the first straight line and an outer contour of the target vehicle and an intersection point of the second straight line and the outer contour of the target vehicle.

In some implementations, the intelligent driving device includes a first image shooting apparatus and a second image shooting apparatus, the first image is captured by the first image shooting apparatus at the first moment, the second image is captured by the second image shooting apparatus at the second moment, the first area is an area in which the first image shooting apparatus is disposed on the intelligent driving device, and the second area is an area in which the second image shooting apparatus is disposed on the intelligent driving device.

In some implementations, the processing unit 2020 is further configured to: when the first rear-view mirror is in a folded state, determine a location of an outer contour of the first rear-view mirror based on the location of the first rear-view mirror on the target vehicle and a first compensation amount; or when the first rear-view mirror is in an unfolded state, determine a location of an outer contour of the first rear-view mirror based on the location of the first rear-view mirror on the target vehicle and a second compensation amount, where the first compensation amount is less than or equal to the second compensation amount.

In some implementations, the processing unit 2020 is further configured to: determine the first compensation amount and/or the second compensation amount based on a vehicle model of the target vehicle.

In some implementations, the target vehicle is located on a side of a first location area, and the first rear-view mirror is close to the first location area; and the first location area is a target parking area of the intelligent driving device, or the first location area is an area through which the intelligent driving device is to pass to travel to a destination.

In some implementations, a drivable width of the first location area is less than or equal to a width threshold.

In some implementations, the processing unit 2020 is configured to: control, based on the location of the first rear-view mirror on the target vehicle, the intelligent driving device to travel into the first location area.

In some implementations, the processing unit 2020 is configured to: control a display apparatus of the intelligent driving device to display the location of the first rear-view mirror on the target vehicle.

For example, the obtaining unit 2010 and the processing unit 2020 may be disposed in the system shown in FIG. 2. More specifically, the obtaining unit 2010 may be disposed in the planning module 220, and the processing unit 2020 may be disposed in the control module 230. For example, the operations performed by the obtaining unit 2010 and the processing unit 2020 may be performed by one processor, or may be performed by different processors. In a specific implementation process, the one or more processors may be processors disposed in the intelligent driving device 100 shown in FIG. 1, or the apparatus 2000 may be a chip disposed in the intelligent driving device 100.

In a specific implementation process, all or some of the units in the foregoing apparatus may be integrated together, or may be implemented independently. In an implementation, these units are integrated together and implemented in a form of system-on-a-chip (system-on-a-chip, SoC).

FIG. 10 is another block diagram of a rear-view mirror detection apparatus according to an embodiment of this application. The rear-view mirror detection apparatus 2100 shown in FIG. 10 may include a processor 2110, a transceiver 2120, and a memory 2130. The processor 2110, the transceiver 2120, and the memory 2130 are connected to each other through an internal connection path. The memory 2130 is configured to store instructions. The processor 2110 is configured to execute the instructions stored in the memory 2130, to implement the methods in the foregoing embodiments. Optionally, the memory 2130 may be coupled to the processor 2110 through an interface, or may be integrated with the processor 2110.

It should be noted that the transceiver 2120 may include but is not limited to a transceiver apparatus of an input/output interface (input/output interface) type, to implement communication between the apparatus 2100 and another device or a communication network.

The memory 2130 may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. As an example instead of a limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The transceiver 2120 uses, for example, but is not limited to, a transceiver apparatus of a transceiver type, to implement communication between the apparatus 2110 and another device or a communication network, to receive/send data/information for implementing the methods in the foregoing embodiments.

An embodiment of this application further provides a computing platform. The computing platform includes the rear-view mirror detection apparatus 2000 or the rear-view mirror detection apparatus 2100 in the foregoing embodiment.

An embodiment of this application further provides an intelligent driving device. The intelligent driving device includes the computing platform in the foregoing embodiment, or the intelligent driving device includes the rear-view mirror detection apparatus 2000 or the rear-view mirror detection apparatus 2100 in the foregoing embodiment.

An embodiment of this application further provides a computer program product. The computer program product includes computer program code. When the computer program code is run on a computer, the computer is enabled to implement the methods in the foregoing embodiments of this application.

An embodiment of this application further provides a computer-readable storage medium. The computer-readable medium stores computer instructions. When the computer instructions are run on a computer, the computer is enabled to implement the methods in the foregoing embodiments of this application.

An embodiment of this application further provides a chip, including a circuit, configured to perform the methods in the foregoing embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In descriptions of embodiments of this application, "/" means "or" unless otherwise specified. For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In embodiments of this application, prefix words such as "first" and "second" are merely used to distinguish between different described objects, and do not limit a location, a sequence, a priority, a quantity, content, or the like of the described object. In embodiments of this application, use of a prefix word, for example, an ordinal number, for distinguishing between the described objects does not constitute a limitation on the described objects. For descriptions of the described objects, refer to the descriptions in the context in the claims or embodiments. Use of such a prefix word should not constitute a redundant limitation.

In several embodiments provided in this application, it should be understood that the disclosed system, apparatus, and method may be implemented in other manners. For example, the described apparatus embodiments are merely examples. For example, division of the units is merely logical function division and may be other division during actual implementation. For example, a plurality of units or assemblies may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

In embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

The units described as separate parts may or may not be physically separate, and parts displayed as units may or may not be physical units, to be specific, may be located in one location, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A rear-view mirror detection method, applied to an intelligent driving device, comprising:
obtaining a first image and a second image, wherein the first image and the second image are images that are captured at different angles and that comprise a first rear-view mirror of a target vehicle;
determining a location of the first rear-view mirror on the target vehicle based on the first image and the second image; and
controlling the intelligent driving device based on the location of the first rear-view mirror on the target vehicle.

2. The method according to claim 1, wherein the first image is captured at a first moment, the second image is captured at a second moment, and the determining the location of the first rear-view mirror on the target vehicle comprises:
determining a first straight line based on the first image, wherein the first straight line is a straight line on which a first area of the intelligent driving device and a root of the first rear-view mirror are located at the first moment;
determining a second straight line based on the second image, wherein the second straight line is a straight line on which a second area of the intelligent driving device and the root of the first rear-view mirror are located at the second moment; and
determining a location of the root of the first rear-view mirror on the target vehicle based on an intersection point of the first straight line and an outer contour of the target vehicle and an intersection point of the second straight line and the outer contour of the target vehicle.

3. The method according to claim 2, wherein the intelligent driving device comprises a first image shooting apparatus and a second image shooting apparatus, the first image is captured by the first image shooting apparatus at the first moment, the second image is captured by the second image shooting apparatus at the second moment, the first area is an area in which the first image shooting apparatus is disposed on the intelligent driving device, and the second area is an area in which the second image shooting apparatus is disposed on the intelligent driving device.

4. The method according to any one of claims 1 to 3, wherein the method further comprises:
when the first rear-view mirror is in a folded state, determining a location of an outer contour of the first rear-view mirror based on the location of the first rear-view mirror on the target vehicle and a first compensation amount; or
when the first rear-view mirror is in an unfolded state, determining a location of an outer contour of the first rear-view mirror based on the location of the first rear-view mirror on the target vehicle and a second compensation amount, wherein
the first compensation amount is less than or equal to the second compensation amount.

5. The method according to claim 4, wherein the method further comprises:
determining the first compensation amount and/or the second compensation amount based on a vehicle model of the target vehicle.

6. The method according to any one of claims 1 to 5, wherein the target vehicle is located on a side of a first location area, and the first rear-view mirror is close to the first location area; and the first location area is a target parking area of the intelligent driving device, or the first location area is an area through which the intelligent driving device is to pass to travel to a destination.

7. The method according to claim 6, wherein a drivable width of the first location area is less than or equal to a width threshold.

8. The method according to claim 6 or 7, wherein controlling the intelligent driving device comprises:
controlling, based on the location of the first rear-view mirror on the target vehicle, the intelligent driving device to travel into the first location area.

9. The method according to any one of claims 1 to 8, wherein the controlling the intelligent driving device comprises:
controlling a display apparatus of the intelligent driving device to display the location of the first rear-view mirror on the target vehicle.

10. A rear-view mirror detection apparatus, comprising:
an obtaining unit, configured to obtain a first image and a second image, wherein the first image and the second image are images that are captured at different angles and that comprise a first rear-view mirror of a target vehicle; and
a processing unit, configured to determine a location of the first rear-view mirror on the target vehicle based on the first image and the second image, wherein
the processing unit is further configured to control an intelligent driving device based on the location of the first rear-view mirror on the target vehicle.

11. The apparatus according to claim 10, wherein the first image is captured at a first moment, the second image is captured at a second moment, and the processing unit is configured to:
determine a first straight line based on the first image, wherein the first straight line is a straight line on which a first area of the intelligent driving device and a root of the first rear-view mirror are located at the first moment;
determine a second straight line based on the second image, wherein the second straight line is a straight line on which a second area of the intelligent driving device and the root of the first rear-view mirror are located at the second moment; and
determine a location of the root of the first rear-view mirror on the target vehicle based on an intersection point of the first straight line and an outer contour of the target vehicle and an intersection point of the second straight line and the outer contour of the target vehicle.

12. The apparatus according to claim 11, wherein the intelligent driving device comprises a first image shooting apparatus and a second image shooting apparatus, the first image is captured by the first image shooting apparatus at the first moment, the second image is captured by the second image shooting apparatus at the second moment, the first area is an area in which the first image shooting apparatus is disposed on the intelligent driving device, and the second area is an area in which the second image shooting apparatus is disposed on the intelligent driving device.

13. The apparatus according to any one of claims 10 to 12, wherein the processing unit is further configured to:
when the first rear-view mirror is in a folded state, determine a location of an outer contour of the first rear-view mirror based on the location of the first rear-view mirror on the target vehicle and a first compensation amount; or
when the first rear-view mirror is in an unfolded state, determine a location of an outer contour of the first rear-view mirror based on the location of the first rear-view mirror on the target vehicle and a second compensation amount, wherein
the first compensation amount is less than or equal to the second compensation amount.

14. The apparatus according to claim 13, wherein the processing unit is further configured to:
determine the first compensation amount and/or the second compensation amount based on a vehicle model of the target vehicle.

15. The apparatus according to any one of claims 10 to 14, wherein the target vehicle is located on a side of a first location area, and the first rear-view mirror is close to the first location area; and the first location area is a target parking area of the intelligent driving device, or the first location area is an area through which the intelligent driving device is to pass to travel to a destination.

16. The apparatus according to claim 15, wherein a drivable width of the first location area is less than or equal to a width threshold.

17. The apparatus according to claim 15 or 16, wherein the processing unit is further configured to:
control, based on the location of the first rear-view mirror on the target vehicle, the intelligent driving device to travel into the first location area.

18. The apparatus according to any one of claims 10 to 17, wherein the processing unit is further configured to:
control a display apparatus of the intelligent driving device to display the location of the first rear-view mirror on the target vehicle.

19. A rear-view mirror detection apparatus, comprising:
a memory, configured to store a computer program; and
a processor, configured to execute the computer program stored in the memory, to enable the apparatus to perform the method according to any one of claims 1 to 9.

20. An intelligent driving device, wherein the intelligent driving device comprises the apparatus according to any one of claims 10 to 19.

21. A computer-readable storage medium, wherein the computer-readable storage medium stores instructions, and when the instructions are executed by a processor, the processor is enabled to implement the method according to any one of claims 1 to 9.

22. A chip, wherein the chip comprises a circuit, and the circuit is configured to perform the method according to any one of claims 1 to 9.
